# EUROPÄISCHE PATENTSCHRIFT

(11) **EP 0 891 859 B1**
(45) Veröffentlichungstag und Bekanntmachung des Hinweises auf die Patenterteilung: **16.04.2003**
(21) Anmeldenummer: 97810507.0
(22) Anmeldetag: 18.07.1997
(51) Int. Cl.: B32B 5/18, E04C 2/20, B60R 13/02

(54) **Verbundplatte**
Composite panel
Panneau composite

(43) Veröffentlichungstag der Anmeldung: 20.01.1999
(73) Patentinhaber: Alcan Technology & Management AG, 8212 Neuhausen am Rheinfall (CH)
(72) Erfinder: Deubelbeiss, Urs, 5210 Windisch (CH)

(56) Entgegenhaltungen:
- WO-A-84/04727
- DE-A- 3 720 371
- DE-A- 3 807 874
- GB-A- 1 265 835
- GB-A- 2 001 905
- US-A- 3 732 138
- US-A- 4 687 691

## Beschreibung

Die Erfindung betrifft eine Verbundplatte mit einem zwischen zwei Deckschichten angeordneten, durch Komprimierung verdichteten und im komprimierten Zustand fixierten Kern aus zumindest teilweise miteinander verklebten Partikeln aus granuliertem Kunststoffschaum. Im Rahmen der Erfindung liegt auch ein Verfahren zur Herstellung einer derartigen Verbundplatte.

Verbundplatten mit zwischen zwei Deckschichten angeordnetem Kern aus geschäumtem Kunststoff sind bekannt. Als Deckschichten werden beispielsweise Platten. Tafeln oder Bleche aus Metall, Kunststoff, Holz oder aus diesen Werkstoffen gefertigten Laminaten hergestellt. Der Kern kann beispielsweise Kunststoffe aus der Reihe des Polyurethans oder des Styrols umfassen. Zur Erzeugung des Kerns werden die Kunststoffe vorgeschäumt und granuliert oder fallen bereits aus dem Herstellungsprozess als granuliertes Schaummaterial an.

Bei der Herstellung einer Verbundplatte wird eine erste Deckschicht in einer Form vorgelegt, wobei die Deckschicht mit den Seitenwänden der Form bündig abschliesst. Mit der an einer Halterung befestigten zweiten Deckschicht wird die Form unter Ausbildung eines Zwischenraumes für den Kern nach oben verschlossen. Durch einen Einlass wird das Granulat aus Schaumstoff, ggf. mit einer über die Oberfläche des Granulates gleichmässig verteilten Klebemasse, in den Hohlraum eingefüllt. Nachdem sich das Granulat gleichmässig im Hohlraum verteilt hat, wird dieser durch eine Bewegung der beiden Deckschichten gegeneinander verkleinert. Das Granulat aus Schaummaterial wird, üblicherweise unter Wärmezufuhr, verdichtet und die einzelnen Partikel gegeneinander bzw. gegen die Deckschichten verklebt. Nach der Druckentlastung und Abkühlung wird der Kern in komprimiertem Zustand fixiert und die Verbundplatte erhält im wesentlichen ihre Enddicke.

Zur Herstellung von Verbundplatten ist es auch bekannt, eine erste Deckschicht vorzulegen, die Kemmasse aufzuschütten und anschliessend die zweite Deckschicht aufzulegen. Für den seitlichen Abschluss der Verbundplatten sowie zur Bereitstellung längs- oder quertaufender bzw. isolierter Zonen ohne Kemmaterial ist schon vorgeschlagen worden, zwischen die Deckschichten Profile einzulegen.

Oft ist es wünschenswert, Verbundplatten lokal zu verstärken, um beispielsweise Beschläge anbringen zu können. Zwischen die Deckschichten eingelegte Profile haben hierbei den Nachteil, dass ohne besondere Vorsichtsmassnahmen bei der Herstellung der Verbundplatten Kemmaterial zwischen Profil und Deckschicht gelangen kann, was eine Wölbung der Platte an dieser Stelle oder eine schlechte Verklebung zur Folge haben kann.

Der Erfindung liegt daher die Aufgabe zugrunde, eine Verbundplatte der eingangs genannten Art mit lokalen Verstärkungen bereitzustellen, die kostengünstig und auf einfache Weise ohne die vorerwähnten Nachteile hergestellt werden können.

Zur erfindungsgemässen Lösung der Aufgabe führt, dass zwischen den Deckschichten ein diesen anliegendes, wenigstens ein röhrenförmiges Stützteil aufweisendes Verstärkungselement angeordnet ist, wobei die Rohrachsen der Stützteile senkrecht zu den Deckschichten stehen.

Der erfindungsgemässe Aufbau der Verstärkungselemente aus röhrenförmigen Stützteilen hat gegenüber üblichen Einlegeprofilen und Distanzhaltern den wesentlichen Vorteil, dass die den Deckschichten zugewandte Anlagefläche, d.h. die Stimseiten der röhrenförmigen Stützteile, verhältnismässig klein ist und demzufolge praktisch keine Auflage für das Kunststoffgranulat bietet. Bei der Plattenherstellung können die granulierten Kunststoffpartikel leicht ausweichen, so dass die Kontaktflächen zwischen Verstärkungselement und Deckschicht frei von Kunststoffgranulat sind.

Im einfachsten Fall besteht das Verstärkungselement aus einer Vielzahl seitlich aneinandergereihter Stützteile. Diese können beispielsweise miteinander verklebt sein. Die Stützteile können jedoch auch mit einem Band, vorzugsweise mit einem Gummioder Klebeband, zum Verstärkungselement zusammengehalten sein.

Der Querschnitt der einzelnen röhrenförmigen Stützteile ist nicht an eine bestimmte Form gebunden und kann demzufolge beispielsweise rund oder polygonal ausgestaltet sein.

Das Verstärkungselement kann auch einstückig mit einem im wesentlichen wabenförmigen Querschnitt ausgebildet sein.

Bei dem Herstellungsverfahren der Verbundplatten, bei denen das Kemmaterial aufgeschüttet wird, ist es zweckmässig, wenn die röhrenförmigen Stützteile einen inneren Durchmesser aufweisen, der grösser ist als der Durchmesser der Partikel aus granuliertem Kunststoffschaum. Dadurch wird sichergestellt, dass sich keine Partikel zwischen den Stirnseiten der röhrenförmigen Stützteile und der angrenzenden Deckschicht festsetzen können.

Die Deckschichten der erfindungsgemässen Verbundplatten können beispielsweise Platten oder Tafeln aus Kunststoff oder Holz, Platten oder Bleche aus Metall oder mehrschichtige Platten, beispielsweise aus verschiedenen Metall-, Holz- und/oder Kunststoffschichten, sein.

Das Verstärkungselement bzw. die einzelnen röhrenförmigen Stützteile können beispielsweise aus Metall oder Kunststoff oder Kombinationen davon sein. Als Wabenkem ausgestaltete Verstärkungselemente können in bekannter Weise aus miteinander verklebten Blechen oder Folien hergestellt sein.

Metallische Verstärkungselemente können beispielsweise aus Eisen, Stahl, Messing, Aluminium, Kupfer, Magnesium usw. sein. Verstärkungselemente aus Kunststoff können z.B. aus Polyvinylchloriden, Polycarbonaten, Polyolefinen, Acrylnitril, Acrylnitril-Styrol, Acrylnitril-Butadien-Styrol, Polyamiden usw. sein. Die Kunststoffe können auch durch metallische Einlagen oder durch Armierungsstoffe, wie Fasern, Gewebe, Gewirke usw. aus Metallen, Kohlenstoff, natürlichen Fasern, wie z.B. Baumwolle, Kunststoffen, wie z.B. Polyamiden, verstärkt sein.

Das Kemmaterial in Granulatform kann beispielsweise auf der unteren Deckschicht aufgehäuft und die obere Deckschicht in die Verarbeitungslage gebracht werden oder -- nach einem weiteren Verfahren -- die untere und die obere Deckschicht werden in Verarbeitungslage gebracht und durch eine dafür vorgesehene Öffnung wird das Kemmaterial, beispielsweise durch Einblasen, zwischen die Deckschichten eingefüllt. Anschliessend werden unter Druck, und üblicherweise unter gleichzeitiger Temperaturerhöhung, die beiden Deckschichten gegeneinander gepresst.

Das Kemmaterial umfasst beispielsweise Partikel aus aufgeschäumten und granulierten Kunststoffen, wie Polystyrol, Polyurethanen, Polyvinylchlorid, Polyolefinen, wie z.B. Polyethylenen oder Polypropylenen. Das Kemmaterial ist vorteilhaft mit einem z.B. physikalisch oder chemisch abbindenden Klebstoff, der beispielsweise ohne Abspaltung flüchtiger Bestandteile oder auch unter Abspaltung flüchtiger Bestandteile abbindet und lösungsmittelhaltig oder lösungsmittelfrei sein kann und beispielsweise aus der Reihe der Ein- und Zweikomponentenklebstoffe, z.B. auf Urethan-, Vinylacetat- oder Epoxydbasis, ausgewählt werden kann, vermischt. Dadurch sind die einzelnen Partikel zumindest teilweise mit einer Klebstoffschicht umhüllt.

Der mittlere Durchmesser der einzelnen Granulatpartikel kann beispielsweise 0,5 bis 10 mm, zweckmässig 1 bis 5 mm, betragen.

Zusätzlich können die Deckschichten auf der dem Kern zugewandten Seite mit einer Klebstoffschicht, wie einer Klebefolie oder einem Klebstoff-Film, ausgestattet sein.

Die Klebstoffe sind beispielsweise physikalisch abbindende Klebstoffe, wie Haftkleber, Kontaktkleber oder Schmelzkleber, oder chemisch reagierende Klebstoffe, wie Polymerisate und Polyaddukte oder Polykondensate.

Mit dem Verpressen verkleinert sich der Abstand zwischen den Deckschichten, während das Kemmaterial komprimiert und kompaktiert wird und die Granulatpartikel gleichzeitig eine feste Schaummasse bilden, die trennfest mit den Deckschichten verbunden ist. Nach der Druckentlastung und einem allfälligen Abkühlen behält die geformte Verbundplatte im wesentlichen die ihr aufgezwungene Dicke.

Die Verdichtungsrate oder das Verdichtungsverhältnis kann beispielsweise von etwa 3:1, zweckmässig 2:1 bis 1,2:1 betragen, d.h. das Kernmaterial wird maximal auf einen Drittel, zweckmässig auf die Hälfte seiner ursprünglichen Höhe bis um ca. 17 % seiner ursprünglichen Dicke verdichtet.

Das wenigstens ein röhrenförmiges Stützteil aufweisende Verstärkungselement wird vor dem Auflegen der zweiten Deckschicht auf die erste Deckschicht aufgesetzt. Hierbei stehen die Rohrachsen der Stützteile senkrecht zu den Deckschichten und die Höhe des Verstärkungselementes entspricht dem Abstand der Deckschichten in der Verbundplatte.

Das Verstärkungselement kann vor oder nach dem Aufschütten des Kunststoffgranulates auf die erste Deckschicht aufgesetzt werden.

Die erfindungsgemässen Verbundplatten werden bevorzugt als Konstruktionselemente für den Hochbau, Tiefbau, Fahrzeugbau oder Containerbau eingesetzt.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1 eine Schrägsicht auf ein Verstärkungselement;
- Fig. 2 einen Querschnitt durch eine Verbundplatte mit eingelegtem Verstärkungselement,
- Fig. 3 einen Schnitt durch die Verbundplatte von Fig. 2 nach deren Linie I-I.

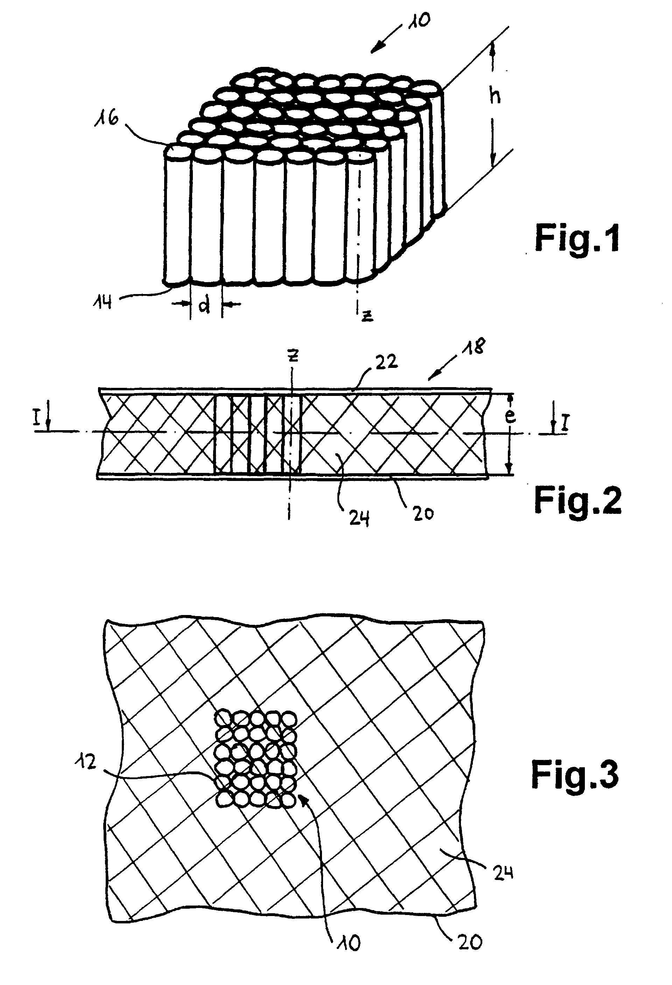

Ein in Fig. 1 dargestelltes Verstärkungselement 10 setzt sich zusammen aus einzelnen röhrenförmigen Stützteilen 12, die mit parallelen Rohrachsen z seitlich aneinandergereiht sind. Die Stützteile 12 weisen alle dieselbe Höhe h auf. Der Querschitt der röhrenförmigen Stützteile 12 kann eine beliebige, beispielsweise runde oder polygonale Form aufweisen. Der innere Durchmesser d muss nicht zwingend für alle röhrenförmigen Stützteile 12 gleich sein. Zweckmässigerweise wird jedoch darauf geachtet, dass der innere Durchmesser d grösser ist als der Durchmesser der Partikel des zur Herstellung des Kerns verwendeten Kunststoffgranulats.

Die röhrenförmigen Stützteile 12 - beispielsweise Aluminiumröhrchen - können mit einem in der Zeichnung nicht dargestellten Gummi- oder Klebeband zum gewünschten Verstärkungselement 10 zusammengefasst sein. Selbstverständlich ist es auch möglich, die einzelnen Stützteile 12 zum Verstärkungselement 10 zu verkleben. Nach einer anderen Ausführungsform ist das Verstärkungselement einstückig als sogenannter Wabenkem ausgestaltet.

Wie in Fig. 2 und 3 gezeigt, ist das Verstärkungselement 10 innerhalb einer Verbundplatte 18 zwischen zwei Deckschichten 20, 22 bündig angeordnet. Hierbei entspricht die Höhe h des Verstärkungselementes 10 der Kemdicke e der Verbundplatte 18.

Das Verstärkungselement 10 liegt über die Stirnseiten 14, 16 den Deckschichten 20, 22 an, wobei die Rohrachsen z der röhrenförmigen Stützteile 12 senkrecht zu den Deckschichten 20, 22 liegen. Zwischen den Deckschichten 20, 22 ist der Kern 24 aus granuliertem Kunststoffschaum angeordnet.

Der innere Durchmesser d der röhrenförmigen Stützteile 12 ist zweckmässigerweise grösser als der Durchmesser der - in der Zeichnung nicht dargestellten - Partikel des Kunststoffgranulats. Aus der Betrachtung der Zeichnung ergibt sich ohne weiteres, dass das Verstärkungselement 10 jede beliebige Grundrissform aufweisen kann und an jeder beliebigen Stelle einer Verbundplatte, so beispielsweise auch an einem Seitenrand, angeordnet sein kann.

## Patentansprüche

1. Verbundplatte mit einem zwischen zwei Deckschichten (20,22) angeordneten, durch Komprimierung verdichteten und im komprimierten Zustand fixierten Kem (24) aus zumindest teilweise miteinander verklebten Partikeln aus granuliertem Kunststoffschaum,
**dadurch gekennzeichnet, dass**
zwischen den Deckschichten (20,22) ein diesen anliegendes, wenigstens ein röhrenförmiges Stützteil (12) aufweisendes Verstärkungselement (10) angeordnet ist, wobei die Rohrachsen (z) der Stützteile (12) senkrecht zu den Deckschichten (20,22) stehen.

2. Verbundplatte nach Anspruch 1, **dadurch gekennzeichnet, dass** das Verstärkungselement (10) aus einer Vielzahl seitlich aneinandergereihter Stützteile (12) besteht.

3. Verbundplatte nach Anspruch 2, **dadurch gekennzeichnet, dass** die Stützteile (12) miteinander verklebt sind.

4. Verbundplatte nach Anspruch 2, **dadurch gekennzeichnet, dass** die Stützteile (12) mit einem Band, vorzugsweise mit einem Gummi- oder Klebeband, zum Verstärkungselement (10) zusammengehalten sind.

5. Verbundplatte nach Anspruch 1, **dadurch gekennzeichnet, dass** das Verstärkungselement (10) einstückig mit einem im wesentlichen wabenförmigen Querschnitt ausgebildet ist.

6. Verbundplatte nach einem der Ansprüche 1 bis 5, **dadurch gekennzeichnet, dass** die röhrenförmigen Stützteile (12) einen inneren Durchmesser (d) aufweisen, der grösser ist als der Durchmesser der Partikel aus granuliertem Kunststoffschaum.

7. Verfahren zur Herstellung einer Verbundplatte (18) mit einem zwischen zwei Deckschichten (20,22) angeordneten Kern (24) aus zumindest teilweise miteinander verklebten Partikeln aus granuliertem Kunststoffschaum, wobei eine erste Deckschicht (20) mit einer Schicht aus granuliertem Kunststoffschaum zur Formung des Kerns (24) belegt, eine zweite Deckschicht (22) auf die Schicht aus granuliertem Kunststoffschaum aufgelegt und der Kern (24) durch Komprimierung verdichtet und im komprimiertem Zustand fixiert wird,
dadurch gekennnzeichnet, dass
vor dem Auflegen der zweiten Deckschicht (22) ein wenigstens ein röhrenförmiges Stützteil (12) aufweisendes Verstärkungselement (10) auf die erste Deckschicht (20) aufgesetzt wird, wobei die Rohrachsen (z) der Stützteile (12) senkrecht zu den Deckschichten (20,22) stehen und die Höhe (h) des Verstärkungselementes (10) dem Abstand (e) der Deckschichten (20,22) in der Verbundplatte (18) entspricht.

8. Verfahren nach Anspruch 7, **dadurch gekennzeichnet, dass** die röhrenförmigen Stützteile (12) einen inneren Durchmesser (d) aufweisen, der grösser ist als der Durchmesser der Partikel aus granuliertem Kunststoffschaum.

9. Verwendung der Verbundplatte nach einem der Ansprüche 1 bis 6 als Konstruktionselement für den Hochbau, Tiefbau, Fahrzeugbau oder Containerbau.

## Claims

1. Composite panel having a core (24) made from particles of granulated plastic foam at least partly adhered to one another arranged between two cover layers (20, 22), compacted by compressing and fixed in the compressed state, **characterised in that** between the cover layers (20, 22) is arranged a reinforcing element (10) resting on the latter and having at least one tubular supporting part (12), wherein the tube axes (z) of the supporting parts (12) stand vertically to the cover layers (20, 22).

2. Composite panel according to claim 1, **characterised in that** the reinforcing element (10) consists of a number of supporting parts (12) laterally next to one another.

3. Composite panel according to claim 2, **characterised in that** the supporting parts (12) are adhered to one another.

4. Composite panel according to claim 2, **characterised in that** the supporting parts (12) are held together with a tape, preferably with a rubber tape or adhesive tape, to form the reinforcing element (10).

5. Composite panel according to claim 1, **characterised in that** the reinforcing element (10) is designed to be integral with an essentially honeycombed cross-section.

6. Composite panel according to one of claims 1 to 5, **characterised in that** the tubular supporting parts (12) have an internal diameter (d) which is greater than the diameter of the particles of granulated plastic foam.

7. Process for producing a composite panel (18) having a core (24) made from particles of granulated plastic foam at least partly adhered to one another arranged between two cover layers (20, 22), wherein a first cover layer (20) is covered by a layer of granulated plastic foam to form the core (24), a second cover layer (22) is applied to the layer of granulated plastic foam and the core (24) is compacted by compressing and fixed in the compressed state, **characterised in that** a reinforcing element (10) having at least one tubular supporting part (12) is placed on the first cover layer (20) before applying the second cover layer (22), wherein the tube axes (z) of the supporting parts (12) stand vertically to the cover layers (20, 22) and the height (h) of the reinforcing element (10) corresponds to the distance (e) of the cover layers (20, 22) in the composite panel (18).

8. Process according to claim 7, **characterised in that** the tubular supporting parts (12) have an internal diameter (d) which is greater than the diameter of the particles of granulated plastic foam.

9. Use of the composite panel according to one of claims 1 to 6 as construction element for structural engineering, civil engineering, vehicle construction or container construction.

## Revendications

1. Panneau composite avec un noyau (24) disposé entre deux couches de couverture (20, 22), compacté par compression et fixé dans l'état comprimé, constitué de particules au moins partiellement collées ensemble de mousse plastique granulée,
**caractérisé en ce que**
entre les couches de couverture (20, 22) est disposé un élément de renfort (10) adjacent à celles-ci présentant au moins une pièce de support (12) tubulaire, les axes des tubes (z) des pièces de support (12) étant perpendiculaires aux couches de couverture (20, 22).

2. Panneau composite suivant la revendication 1, **caractérisé en ce que** l'élément de renfort (10) est constitué d'un grand nombre de pièces de support (12) juxtaposées.

3. Panneau composite suivant la revendication 2, **caractérisé en ce que** les pièces de support (12) sont collées ensemble.

4. Panneau composite suivant la revendication 2, **caractérisé en ce que** les pièces de support (12) sont maintenues ensemble avec l'élément de renfort (10) par une bande, de préférence une bande en caoutchouc ou une bande adhésive.

5. Panneau composite suivant la revendication 1, **caractérisé en ce que** l'élément de renfort (10) est formé en un étage d'une section essentiellement en forme de nid d'abeilles.

6. Panneau composite suivant l'une des revendications 1 à 5, **caractérisé en ce que** les pièces de support tubulaires (12) présentent un diamètre intérieur (d) qui est supérieur au diamètre des particules de mousse plastique granulée.

7. Procédé de fabrication d'un panneau composite (18) avec un noyau (24) disposé entre deux couches de couverture (20, 22), constitué de particules au moins partiellement collées ensemble de mousse plastique granulée, une première couche de couverture (20) étant revêtue d'une couche de mousse plastique granulée afin de former le noyau (24), une deuxième couche de couverture (22) étant placée sur la couche de mousse plastique granulée et le noyau (24) étant compacté par compression et fixé dans l'état comprimé,
**caractérisé en ce que**
avant de placer la deuxième couche de couverture (22), un élément de renfort (10) présentant au moins une pièce de support (12) tubulaire est placé sur la première couche de couverture (20), les axes des tubes (z) des pièces de support (12) étant perpendiculaires aux couches de couverture (20, 22) et la hauteur (h) de l'élément de renfort (10) correspondant à la distance (e) entre les couchés de couverture (20, 22) dans le panneau composite (18).

8. Procédé suivant la revendication 7, **caractérisé en ce que** les pièces de support tubulaires (12) présentent un diamètre intérieur (d) qui est supérieur au diamètre des particules de mousse plastique granulée.

9. Utilisation du panneau composite suivant l'une des revendications 1 à 6 comme élément de construction pour la construction de bâtiments, le génie civil, la construction automobile ou la fabrication de conteneurs.
